# EUROPÄISCHE PATENTANMELDUNG

(11) **EP 3 091 640 A1**
(43) Veröffentlichungstag der Anmeldung: **09.11.2016**
(21) Anmeldenummer: 16158215.0
(22) Anmeldetag: 02.03.2016
(51) Int. Cl.: H02K 1/27, H02K 9/02, H02K 9/22

(54) **ROTOR FÜR AXIALFLUSSMASCHINE**

(30) Priorität: 05.05.2015 DE 102015208281
(71) Anmelder: ROBERT BOSCH GMBH, 70442 Stuttgart (DE)
(72) Erfinder: Fickert, Martin, 70197 Stuttgart (DE); Oetting, Claus-Christian, 87544 Blaichach (DE); Kremer, Mickael, 70806 Kornwestheim (DE); Flore, Dominik, 34414 Warburg (DE); Braeunig, Anton, 70176 Stuttgart (DE)

(57) **Zusammenfassung**

Ein Rotor (18) für eine elektrische Axialflussmaschine (10) umfasst eine Welle (24);
einen Magnetträger (22), der die Welle (24) umgibt; und eine Mehrzahl von Permanentmagneten (28), die die Welle (24) in einer Umfangsrichtung umgeben. Der Magnetträger (22) weist zwei sich in radiale Richtung erstreckende Kunststoffscheiben (26) auf, zwischen denen die Permanentmagnete (28) befestigt sind.

## Beschreibung

### Gebiet der Erfindung

Die Erfindung betrifft einen Rotor für eine Axialflussmaschine sowie eine Axialflussmaschine mit einem derartigen Rotor.

### Stand der Technik

Elektrische Maschinen mit einem scheibenförmigen Rotor bzw. elektrische Axialflussmaschinen ermöglichen hohe Drehmomente und Leistungsdichten in kurzen axialen Bauräumen. Ein Stator erzeugt dabei einen axial ausgerichteten Magnetfluss, der durch Permanentmagnete eines Rotors verläuft.

Diese elektrischen Maschinen können unterschiedlich aufgebaut sein. Beispielsweise kann die elektrische Maschine einen Stator neben einem Rotor, einen Rotor zwischen zwei Statorelementen oder einen Stator zwischen zwei Rotorelementen aufweisen.

Normalerweise wird der Rotor aus einer oder mehreren Vollscheiben gebaut. Diese Vollscheiben tragen Permanentmagnete, die parallel zur Drehachse magnetisiert sind und kreisförmig zur Rotationsachse angeordnet sind. Die Rotorscheibe, in der die Permanentmagnete fixiert sind, ist meistens sehr flach. Die Permanentmagnete sind beispielsweise in eine Vollscheibe integriert, die die Permanentmagnete in der Ebene der Vollscheibe umschließt, aber axial frei lässt. Derartige rahmenförmige Ausführungen werden beispielsweise in der US 8 624 456 B2 oder der US 2005 0 285 467 A1 beschrieben.

Durch eine Verbindung von Rotor und Magnet entstehen bei einer Vollscheibe in Rahmenbauweise immer Kerben, in denen durch Fliehkräfte und Erwärmung sehr hohe Beanspruchungen auftreten können. Beispielsweise kann bei einer stoffschlüssigen Verbindung von Magnet und Scheibe die Klebung hoch beansprucht werden. Bei einer formschlüssigen Magnetanbindung kann die Vollscheibe hoch beansprucht werden.

Eine Vollscheibe, die die Permanentmagnete auf allen Seiten umschließt, kann bei einer Verwendung beliebiger Magnetformen (wie etwa Rechteckmagnete) eine komplexe Form einnehmen, welche zum einen kostenintensiv in der Fertigung sein kann und/oder zum anderen mechanische Schwachstellen durch Spannungsüberhöhungen bergen kann.

In der Regel sind die Vollscheiben aus einem weder elektrisch noch magnetisch leitfähigen Werkstoff gefertigt, um Wirbelstromverluste gering zu halten. Solche Werkstoffe sind aber meistens gleichzeitig auch keine guten thermischen Leiter.

Der Luftspalt zwischen Rotor und Stator ist normalerweise sehr klein, sodass nur ein geringer Luftstrom zur Kühlung vorliegt. Aufgrund einer notwendigen Kühlung ist bei Vollscheiben die Dauerleistung solcher elektrischen Maschinen begrenzt.

Die CN 103384098 A zeigt einen Permanentmagnete tragenden Rotor für eine elektrische Maschine. Die Permanentmagnete sind zwischen einem scheibenförmigen magnetischen Kern getragen und einer Abdeckplatte aufgenommen.

### Offenbarung der Erfindung

### Vorteile der Erfindung

Ausführungsformen der vorliegenden Erfindung können in vorteilhafter Weise ermöglichen, die mechanischen Schwachstellen eines Rotor für eine Axialflussmaschine zu reduzieren, den Aufwand zum Umgestalten des Rotors aufgrund anders geformter Magnete zu reduzieren und/oder die Kühlung des Rotors zu verbessern.

Ein Aspekt der Erfindung betrifft einen Rotor für eine elektrische Axialflussmaschine. Eine Axialflussmaschine umfasst in der Regel ein oder mehrere Rotorelemente (die den Rotor bilden), die zwischen einem oder mehreren Statorelementen (die den Stator bilden) aufgenommen sind. Der Stator erzeugt mit der Hilfe von bestromten Magneten einen axialen magnetischen Fluss, der durch Permanentmagnete im Rotor geführt ist und den Rotor in Drehung versetzt.

Gemäß einer Ausführungsform der Erfindung umfasst der Rotor eine Welle, einen Magnetträger, der die Welle umgibt und an der Welle mit seinem inneren Rand befestigt ist, und eine Mehrzahl von Permanentmagneten, die die Welle in einer Umfangsrichtung umgeben und einen Ring bilden können. Der Magnetträger weist zwei sich in radiale Richtung erstreckende Kunststoffscheiben auf, zwischen denen die Permanentmagnete befestigt sind. Die Kunststoffscheiben können an ihrem radial innen liegenden Rand mit der Welle verbunden sein. Die Permanentmagnete können mit den Kunststoffscheiben stoffschlüssig und/oder formschlüssig verbunden sein.

Der Rotor kann auf diese Weise eine Sandwich-Bauweise aufweisen. Zwei scheibenförmige Kunststoffplatten dienen als Magnetträger, zwischen denen ein Ring von Permanentmagneten aufgenommen ist. Bei diesem zweiteiligen, axial geschichteten Aufbau können die Permanentmagnete in axialer Richtung zum Stator hin von den lasttragenden Kunststoffscheiben überdeckt werden. Der Kunststoff, der die Fliehkraft von dem Permanentmagneten zur Welle hin überträgt, muss sich also nicht radial innerhalb der Permanentmagnete befinden.

Insgesamt kann mit dem Rotor das Werkstoffvolumen verringert werden, was zu einer Reduktion der Materialkosten führen kann. Der Magnetträger weist eine einfache Geometrie auf und kann mit kostengünstigen Werkzeugen hergestellt werden. Durch das geringe Volumen des Magnetträgers aufgrund von dünnwandigen Kunststoffscheiben erfolgt nur eine geringere Schrumpfung und/oder geringer Verzug bei der Herstellung des Magnetträgers.

Da die Permanentmagnete und insbesondere deren Ecken nicht in Fenstern mit gekerbten Strukturen in dem Magnetträger aufgenommen werden müssen, entstehen keine mechanischen Schwachstellen durch Spannungsüberhöhung. Beliebige Magnetformen können verwendet werden, ohne dass ein zusätzlicher Aufwand bei der Herstellung des Magnetträgers entsteht. Beispielsweise können ohne Schwierigkeiten rechteckförmige Permanentmagnete verwendet werden.

Da große Flächen zum Anbinden genutzt werden können, entstehen nur geringe Spannungen in den Anbindungsflächen der Permanentmagnete aufgrund von Fliehkraft oder Erwärmung.

Gemäß einer Ausführungsform der Erfindung sind die Kunststoffscheiben aus faserverstärktem Kunststoff gefertigt, beispielsweise glasfaserverstärktem Kunststoff (GFK) oder kohlenstofffaserverstärktem Kunststoff (CFK). Der Kunststoff kann ein endlos faserverstärkter Kunststoff sein, bei dem die Fasern in der Regel erst an den Rändern der Kunststoffscheiben enden. Ein faserverstärkter Kunststoff ist in der Regel extrem biegesteif, was zu einem guten Schwingungsverhalten des Rotors führt.

Die Kunststoffscheiben können in einem ersten Arbeitsschritt hergestellt werden, beispielsweise mittels Spritzpressens (RTM). In einem zweiten Arbeitsschritt können die Permanentmagnete mit den beiden Kunststoffscheiben verbunden werden. Eine Integration der Permanentmagnete in einem separaten Arbeitsschritt führt zu einer einfacheren Positionierung und zu einem weniger komplexen Herstellungsprozess.

Gemäß einer Ausführungsform der Erfindung verlaufen Orientierungsrichtungen von Fasern des faserverstärkten Kunststoffs um den gesamten Rotor herum in radiale Richtung. Auf diese Weise weist der faserverstärkte Kunststoff eine optimale radial laufende Faserorientierung auf, die besonders die radial wirkenden Fliehkräfte gut übertragen kann.

Gemäß einer Ausführungsform der Erfindung sind die Permanentmagnete seitlich in axialer Richtung an den Kunststoffscheiben befestigt. Beispielsweise kann eine stoffschlüssige Befestigung der Permanentmagnete an den Kunststoffscheiben (in etwa durch Kleben) erfolgen.

Gemäß einer Ausführungsform der Erfindung weist wenigstens eine der Kunststoffscheiben an einem Außenumfang des Rotors Laschen auf, die in axiale Richtung umgeknickt sind. Diese Laschen können beispielsweise bei einem noch nicht ausgetrockneten Halbzeug für die Kunststoffscheiben erzeugt werden. Weiter können die Permanentmagnete auf den Laschen aufgestützt sein. Es ist auch möglich, dass eine formschlüssige Befestigung der Permanentmagnete an den Magnetträger erfolgt, beispielsweise indem die Permanentmagnete auf den Laschen am Außenradius des Magnetträgers abgestützt sind.

Mit der Sandwich-Bauweise des Rotors ergeben sich auch neue Möglichkeiten zur Kühlung der Permanentmagnete, die sich aufgrund von Wirbelströmen, die durch den magnetischen Fluss erzeugt werden, erwärmen können. Insbesondere entsteht zwischen der Welle und den Permanentmagneten ein (ringförmiger) Hohlraum, der in axiale Richtung von den Kunststoffscheiben begrenzt ist. Dieser Hohlraum kann zum Kühlen der Permanentmagnete verwendet werden. Über Schlitze zwischen den Permanentmagneten kann der Hohlraum in radiale Richtung mit dem Außenumfang des Rotors verbunden sein.

Gemäß einer Ausführungsform der Erfindung weisen die Kunststoffscheiben Lüftungsöffnungen auf, die radial innerhalb der Permanentmagnete angeordnet sind. Diese Lüftungsöffnungen verbinden den Hohlraum mit dem Raum zwischen dem Rotor und dem Stator.

Gemäß einer Ausführungsform der Erfindung sind an den Kunststoffscheiben Luftschaufeln vorgesehen, die dazu ausgeführt sind, bei Rotation des Rotors Luft zwischen die Kunststoffscheiben, beispielsweise in den Hohlraum, zu verbringen. Die Luftschaufeln können die Luft in die Lüftungsöffnungen leiten, wo sie in den Hohlraum strömt, um beispielsweise den Rotor am Außenumfang wieder zu verlassen. Durch diesen induzierten Luftstrom durch den Rotor kann eine effektive Kühlung der Permanentmagnete erreicht werden.

Gemäß einer Ausführungsform der Erfindung sind radial innerhalb der Permanentmagnete zwischen den Kunststoffscheiben Formelemente angebracht, die zusammen mit Schlitzen zwischen den Permanentmagneten Düsen bilden. Diese Formelemente können beispielsweise an ihrer Basis in Umfangsrichtung genauso breit wie die Permanentmagnete sein und sich anschließend verjüngen.

Gemäß einer Ausführungsform der Erfindung ist radial innerhalb der Permanentmagnete (in dem Hohlraum) zwischen den Kunststoffscheiben ein Wärmeleitring angebracht, der die Permanentmagnete an ihrer Innenseite berührt. Dieser Wärmeleitring kann an seinem Außenumfang mit den Permanentmagneten in thermischem Kontakt stehen. Der Wärmeleitring kann auch radiale Finnen aufweisen, die mit Luft gekühlt werden können, beispielsweise wie eben stehend beschrieben.

Gemäß einer Ausführungsform der Erfindung sind in einem Hohlraum, der zwischen der Welle, den Kunststoffscheiben und den Permanentmagneten gebildet ist, ein Vlies und ein Arbeitsmedium angeordnet, die dazu ausgeführt sind, Wärme von den Permanentmagneten weg zu befördern. Das Vlies kann in dem Hohlraum ringförmig verlaufen und dazu ausgeführt sein, Flüssigkeit, die durch die Fliehkraft gegen die Permanentmagneten gedrückt wird, an einer der Kunststoffscheiben entlang in Richtung der Achse zu saugen, wo sie gekühlt wird.

Die Sandwich-Bauform kann somit auch eine Kühlvorrichtung nach dem Heat-Pipe-Prinzip umfassen. Der Hohlraum kann in diesem Fall komplett abgedichtet sein. Durch ein entsprechend ausgewähltes Arbeitsmedium, das bei einer Temperatur kondensiert, die die Welle im Betrieb aufweist, und das bei einer Betriebstemperatur der Permanentmagnete verdampft, kann Wärme von den Permanentmagneten an die Welle abgeführt werden. Der konvektive Wärmeübergang nach außen an die Luft wird nicht stark behindert, da die Kunststoffscheiben, insbesondere wenn sie faserverstärkt sind, extrem dünnwandig ausgelegt werden können (in etwa 0,5 mm bis 1 mm) und somit einen kleinen thermischen Widerstand aufweisen können.

Ein weiterer Aspekt der Erfindung betrifft eine Axialflussmaschine mit einem derartigen Rotor.

Gemäß einer Ausführungsform der Erfindung umfasst die Axialflussmaschine ein Gehäuse, einen Rotor nach einem der vorhergehenden Ansprüche, der mit seiner Welle in dem Gehäuse drehbar gelagert ist, und einen vom Gehäuse getragenen, bestrombaren Stator mit zwei Statorelementen, die an gegenüberliegenden axialen Seiten des Rotors angeordnet sind und die dazu ausgeführt sind, einen axialen magnetischen Fluss durch den Rotor zu erzeugen. Mit anderen Worten ist der Rotor zwischen zwei Statorelementen angeordnet. In dieser Konstellation kann es vorteilhaft sein, dass der Rotor symmetrisch zu seiner Mittelebene ist und/oder die beiden Statorelemente identisch aufgebaut sind.

Ideen zu Ausführungsformen der vorliegenden Erfindung können unter anderem als auf den nachfolgend beschriebenen Gedanken und Erkenntnissen beruhend angesehen werden.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine Explosionsdarstellung einer Axialflussmaschine gemäß einer Ausführungsform der Erfindung.
Fig. 2 zeigt einen schematischen Querschnitt durch einen Rotor gemäß einer Ausführungsform der Erfindung.
Fig. 3 zeigt einen schematischen Querschnitt durch einen Rotor gemäß einer Ausführungsform der Erfindung.
Fig. 4 zeigt schematisch eine Kunststoffscheibe für einen Rotor gemäß einer Ausführungsform der Erfindung.
Fig. 5 zeigt eine schematische perspektivische Ansicht eines Magnetträgers für einen Rotor gemäß einer Ausführungsform der Erfindung.
Fig. 6 zeigt eine schematische perspektivische Ansicht des Magnetträgers aus der Fig. 5.
Fig. 7 zeigt eine schematische perspektivische Ansicht eines Magnetträgers für einen Rotor gemäß einer Ausführungsform der Erfindung.
Fig. 8 zeigt eine schematische perspektivische Ansicht eines Magnetträgers für einen Rotor gemäß einer Ausführungsform der Erfindung.
Fig. 9 zeigt einen schematischen Längsschnitt durch einen Rotor gemäß einer Ausführungsform der Erfindung.
Fig. 10 zeigt eine schematische perspektivische Ansicht eines Magnetträgers für einen Rotor gemäß einer Ausführungsform der Erfindung.
Fig. 11a, 11b und 11c zeigen Profile von Wärmeleitringen für einen Rotor gemäß einer Ausführungsform der Erfindung.
Fig. 12 zeigt einen schematischen Querschnitt durch einen Rotor gemäß einer Ausführungsform der Erfindung.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

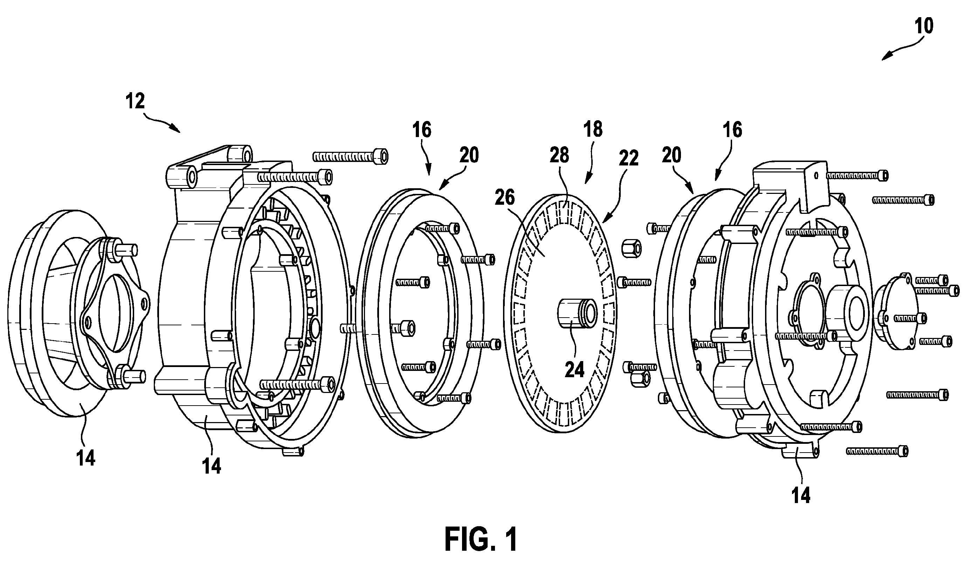

Fig. 1 zeigt eine elektrische Axialflussmaschine bzw. einen Scheibenläufer 10, die bzw. der ein Gehäuse 12 aus mehreren Komponenten 14 umfasst, in der zwei ringförmige Statorelemente 16 und ein dazwischen angeordneter scheibenförmiger Rotor 18 angeordnet ist. In den beiden identisch aufgebauten Statorelementen 16 befinden sich Wicklungen 20, die bei Bestromung einen magnetischen Fluss mit Komponenten im Wesentlichen in axialer Richtung durch den Rotor 18 hindurch erzeugen und den Rotor 18 in Drehung versetzen können.

Der Rotor 18 umfasst einen Magnetträger 22, der um eine Welle 24 des Rotors drehbar ist. Der Magnetträger 22 umfasst zwei separate Kunststoffscheiben 26, zwischen denen eine Mehrzahl von Permanentmagneten 28 auf einer Kreisbahn um die Achse der Welle 24 angeordnet ist.

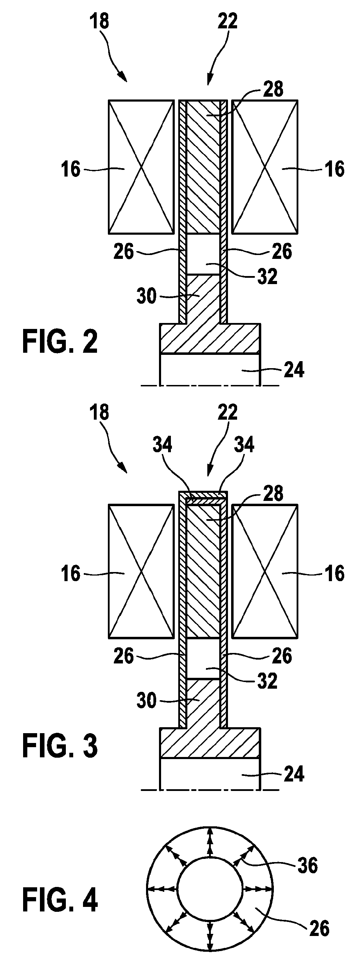

Fig. 2 zeigt einen Rotor 18 zwischen zwei Statorelementen 16. Der Magnetträger 22 umfasst zwei runde Kunststoffscheiben 26, die sich in radialer Richtung erstrecken und/oder im Wesentlichen parallel zueinander angeordnet sind. Die Permanentmagnete 28 sind dabei mit ihren axialen Seitenflächen zwischen die Kunststoffscheiben 22 geklebt, um das Drehmoment zu übertragen. Auch können die beiden Kunststoffscheiben 26 mit ihrem inneren Rand an einen umlaufenden Vorsprung 30 der Welle 24 befestigt, beispielsweise geklebt, sein.

Zwischen dem Innenumfang der Permanentmagnete 28 und dem Außenumfang des Vorsprungs 30 bzw. der Welle 24 ist zwischen den Kunststoffscheiben 26 ein Hohlraum 32 gebildet, der beispielsweise zur Kühlung der Permanentmagnete 28 verwendet werden kann.

Analog zu Fig. 2 zeigt Fig. 3 einen Rotor 18, dessen Kunststoffscheiben 26 zusätzlich Laschen 34 aufweisen, die in axiale Richtung abgeknickt sind. Die Laschen 34 der beiden Kunststoffscheiben 26 können miteinander verklebt sein, um einen Außenumfang des Magnetträgers 22 zu bilden, an dem die Permanentmagnete 28 nach radial außen abgestützt sind. Die Permanentmagnete 28 können mit den Laschen 34 und/oder mit den Kunststoffscheiben 26 in axiale Richtung verklebt sein.

Insgesamt können die auf die Permanentmagnete 28 wirkenden Fliehkräfte also stoffschlüssig und/oder formschlüssig erfolgen.

Fig. 4 zeigt schematisch, dass die Kunststoffscheiben 26 aus faserverstärktem Kunststoff bestehen können, wobei die Fasern 36 radial ausgerichtet sind. Damit kann gemeint sein, dass mehr als 20 % der Fasern eine Orientierungsrichtung in radiale Richtung aufweisen.

Zum Herstellen einer Kunststoffscheibe 26 kann ein trockenes Faserhalbzeug (wie etwa gestapelte Lagen aus Fasern) mit einem Binder versehen werden und zu einer formstabilen Einheit verpresst werden.

Falls Laschen 34 vorgesehen sind, kann der Rand der Einheit gestanzt werden, um die Laschen 34 zu erzeugen. Anschließend können die Laschen auf einem warmen Werkzeug umgebogen werden. Das entstehende Halbzeug kann dann in einem RTM-Werkzeug mit Harz ausgefüllt werden.

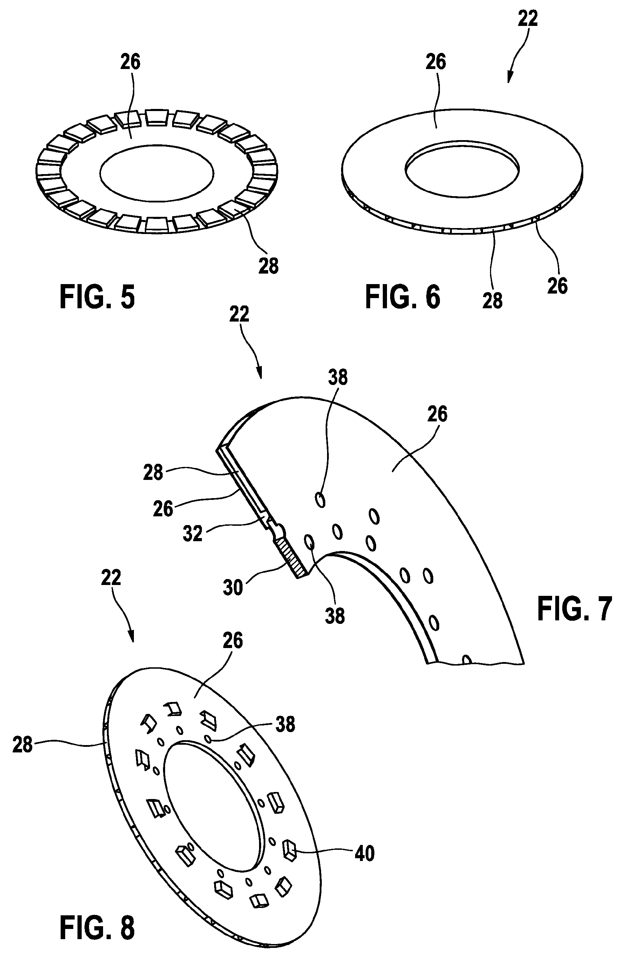

In den Fig. 5 und 6 ist ein möglicher Herstellprozess für den Magnetträger 22 dargestellt.

Eine, beispielsweise wie eben beschrieben hergestellte, Kunststoffscheibe 26 wird bereitgestellt, die Permanentmagnete werden darauf in einem Kreis angeordnet und festgeklebt. Anschließend wird eine zweite Kunststoffscheibe 26, die genauso wie eben beschrieben hergestellt werden kann, als Deckel auf die Permanentmagnete 28 aufgeklebt. Falls Laschen 34 vorhanden sind, können auch diese miteinander verklebt werden.

Die Fig. 7 zeigt, dass der Magnetträger 22 zur Kühlung seitliche Lüftungsöffnungen 38 aufweisen kann, die den Hohlraum 34 mit der Umgebung des Rotors 18 verbinden. Solche Lüftungsöffnungen 38 können auch im Vorsprung 30 der Welle 24 vorgesehen sein.

Die Fig. 8 zeigt, dass Lüftungsöffnungen 38 auch von Schaufeln 40 auf einer oder beiden der Kunststoffscheiben 26 überdeckt sein können, die bei Drehung des Rotors 18 Luft in die Lüftungsöffnungen 38 verbringen können.

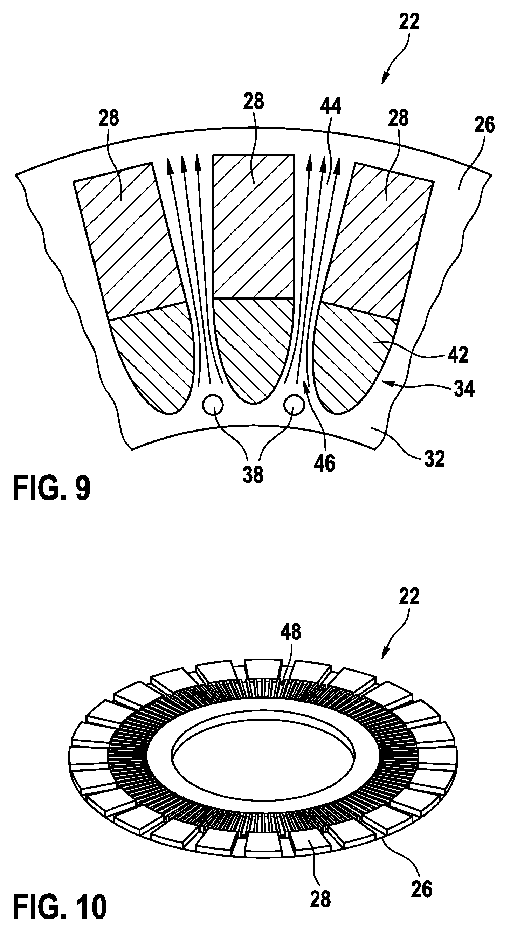

Die Fig. 9 zeigt, dass die Lüftungsöffnungen 38 radial innerhalb der Permanentmagnete 28 und/oder in Umfangsrichtung zwischen den Permanentmagneten 28 vorgesehen sein können. Weiter können in dem Hohlraum 34 Formstücke 42 (z.B. aus Kunststoff) unterhalb der Permanentmagnete 28 angebracht sein, um zusammen mit einem Schlitz 44 zwischen zwei Permanentmagneten 28 eine Düse 46, wie etwa eine Lavaldüse, zu bilden. Dies kann zu einem hohen Staudruck am Außenumfang des Magnetträgers 22 führen, wodurch der Luftstrom zusätzlich unterstützt wird.

Fig. 10 zeigt, dass die Kühlung auch konduktiv erfolgen kann, indem beispielsweise radial innerhalb der Permanentmagnete 28 ein Wärmeleitring 48, beispielsweise aus Aluminium, angeordnet wird. Der Wärmeleitring 48 kann eingelegt oder eingeklebt sein. Der Wärmeleitring 48 befindet sich radial innerhalb des Magnetkreises des Axialflussmotors 10, wodurch nur sehr kleine Wirbelstromverluste in dem Wärmeleitring 48 entstehen.

Zudem können der Aufbau des Wärmeleitrings 48 und dessen Montage sehr einfach und kostengünstig sein.

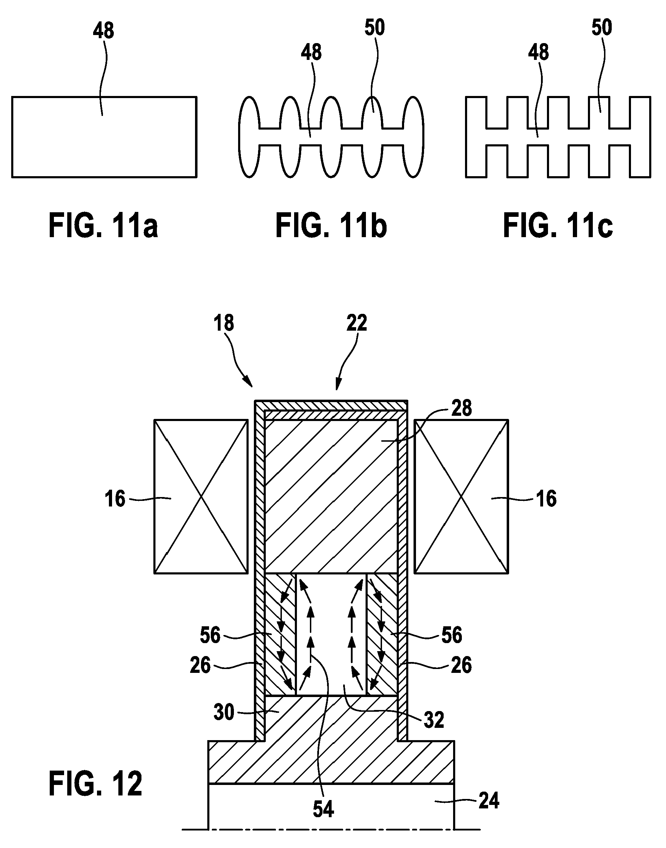

Die Fig. 11a bis 11c zeigen verschiedene Profile für den Wärmeleitring 48. Der Wärmeleitring kann einen rechteckigen Querschnitt (Fig. 11a), abgerundete (Fig. 11b) oder rechteckige (Fig. 11c) Finnen bzw. Kühlrippen 50 aufweisen. Diese Finnen bzw. Kühlrippen 50 können in radiale Richtung verlaufen.

Die Fig. 12 zeigt, dass der Hohlraum 32 hermetisch abschlossen sein kann. Ein Arbeitsmedium bzw. Kühlmedium 54 innerhalb des Hohlraums 32 kann als

Kühlmittel Wärme von den Permanentmagneten 28 zu den Kunststoffscheiben 26 und/oder der Welle 24 transportieren. Ein ringförmiges Vlies 56, das in dem Hohlraum an den Kunststoffscheiben 26 angebracht sein kann, kann den Transport des Kühlmediums 54 nach dem Heat-Pipe-Prinzip unterstützen.

Abschließend ist darauf hinzuweisen, dass Begriffe wie "aufweisend", "umfassend" etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Rotor (18) für eine elektrische Axialflussmaschine (10), der Rotor (18) umfassend:
eine Welle (24);
einen Magnetträger (22), der die Welle (24) umgibt;
eine Mehrzahl von Permanentmagneten (28), die die Welle (24) in einer Umfangsrichtung umgeben;
**dadurch gekennzeichnet, dass**
der Magnetträger (22) zwei sich in radiale Richtung erstreckende Kunststoffscheiben (26) aufweist, zwischen denen die Permanentmagnete (28) befestigt sind.

2. Rotor (18) nach Anspruch 1, wobei die Kunststoffscheiben (26) aus
faserverstärktem Kunststoff gefertigt sind.

3. Rotor (18) nach Anspruch 1 oder 2,
wobei Orientierungsrichtungen von Fasern (36) des faserverstärkten Kunststoffs um den gesamten Rotor (18) herum in radiale Richtung verlaufen.

4. Rotor (18) nach einem der vorhergehenden Ansprüche,
wobei die Permanentmagnete (28) seitlich in axialer Richtung an den Kunststoffscheiben (26) befestigt sind.

5. Rotor (18) nach einem der vorhergehenden Ansprüche,
wobei wenigstens eine der Kunststoffscheiben (26) an einem Außenumfang des Rotors (18) Laschen (34) aufweist, die in axialer Richtung umgeknickt sind; und/oder
wobei die Permanentmagnete (28) an den Laschen (34) abgestützt sind.

6. Rotor (18) nach einem der vorhergehenden Ansprüche,
wobei die Kunststoffscheiben (26) Lüftungsöffnungen (38) aufweisen, die radial innerhalb der Permanentmagnete (28) angeordnet sind; und/oder wobei an den Kunststoffscheiben (26) Luftschaufeln (40) vorgesehen sind, die dazu ausgeführt sind, bei Rotation des Rotors (18) Luft zwischen die Kunststoffscheiben (26) zu bringen.

7. Rotor (18) nach einem der vorhergehenden Ansprüche,
wobei radial innerhalb der Permanentmagnete (28) zwischen den Kunststoffscheiben (26) Formelemente (42) angebracht sind, die zusammen mit Schlitzen (44) zwischen den Permanentmagneten (28) Düsen (46) bilden.

8. Rotor (18) nach einem der vorhergehenden Ansprüche,
wobei radial innerhalb der Permanentmagnete (28) zwischen den Kunststoffscheiben (26) ein Wärmeleitring (48) angebracht ist, der die Permanentmagnete (28) an ihrer Innenseite berührt.

9. Rotor (18) nach einem der vorhergehenden Ansprüche,
wobei in einem Hohlraum (32), der zwischen der Welle (24), den Kunststoffscheiben (26) und den Permanentmagneten (28) gebildet ist, ein Vlies (56) und ein Arbeitsmedium (54) angeordnet sind, die dazu ausgeführt sind, Wärme von den Permanentmagneten (28) weg zu befördern.

10. Axialflussmaschine (10), umfassend:
ein Gehäuse (14);
einen Rotor (18) nach einem der vorhergehenden Ansprüche, der mit seiner Welle (24) in dem Gehäuse (14) drehbar gelagert ist;
einen vom Gehäuse (14) getragenen bestrombaren Stator mit zwei Statorelementen (16), die an gegenüberliegenden axialen Seiten des Rotors (18) angeordnet sind und die dazu ausgeführt sind, einen axialen magnetischen Fluss durch den Rotor (18) zu erzeugen.
